# DEMANDE DE BREVET EUROPEEN

(11) **EP 2 770 249 A1**
(43) Date de publication de la demande: **27.08.2014**
(21) Numéro de dépôt: 14156257.9
(22) Date de dépôt: 21.02.2014
(51) Int. Cl.: F21S 8/10, B60Q 1/00

(54) **Phare de véhicule**

(30) Priorité: 22.02.2013 FR 1351567
(71) Demandeur: VALEO VISION, 93012 Bobigny Cedex (FR)
(72) Inventeur: Meyrenaud, Jean-Luc, 93190 LIVRY GARGAN (FR); Thabet, Ziyed, 75015 PARIS (FR)

(57) **Abrégé**

L'invention se rapporte à un dispositif d'éclairage d'un véhicule, comprenant au moins une cavité délimitée par un réflecteur (1) définissant un axe optique (5), ladite cavité comportant au moins une source lumineuse principale (4) apte à éclairer une route. Ladite au moins une cavité contient au moins une source lumineuse secondaire (7) permettant de réaliser au moins partiellement une signalisation du véhicule le jour.

## Description

L'invention se rapporte à un dispositif d'éclairage et de signalisation d'un véhicule. Généralement un véhicule, et notamment un véhicule automobile, est doté d'une source d'éclairage destinée à illuminer par temps sombre une route, afin de permettre à un conducteur de guider son véhicule avec sécurité, et une source lumineuse de signalisation de plus faible intensité, prévue pour informer les autres conducteurs de la présence dudit véhicule en plein jour. Plus spécifiquement, l'invention porte sur un dispositif d'éclairage et de signalisation amélioré d'un véhicule.

Habituellement la fonction de signalisation du véhicule est réalisée au moyen de feux de circulation diurne ou DRL (de l'anglais *Daytime Running Lamps*), qui est un dispositif impliquant une lumière blanche placée à l'avant du véhicule et qui s'allume automatiquement lorsque le véhicule se déplace vers l'avant, afin d'accroître la visibilité du véhicule dans des conditions de lumière de jour.

Un tel dispositif de signalisation est actuellement réalisé sous différentes formes :
- soit une pluralité de diodes électroluminescentes ou LED (de l'anglais *Light Emitting Diode*) disposées selon une géométrie particulière,
- soit un guide de lumière,
- soit des miroirs et/ou des lentilles.

Ce dispositif est indépendant et vient s'ajouter au dispositif d'éclairage prévu pour éclairer la route. Il en résulte que la coexistence de ces deux dispositifs distincts entraine un encombrement important au sein du véhicule, et en particulier au niveau des projecteurs avant dans lesquels ils sont généralement placés. De plus, puisque chacun des ces deux dispositifs se fonde sur un réflecteur qui lui est spécifique, il est nécessaire de fabriquer deux réflecteurs distincts, dont le temps d'usinage global est long et donc plus coûteux. Enfin, l'éclairage de signalisation produit le jour est différent de celui qui est généré la nuit pour éclairer la route, si bien que l'éclairage du véhicule ne constitue pas un signe distinctif et reconnaissable en toutes circonstances, permettant d'identifier le modèle et/ou la marque dudit véhicule

Les dispositifs d'éclairage d'un selon l'invention permettent de remédier aux inconvénients relevés dans l'état de la technique.

L'invention a pour objet un dispositif d'éclairage d'un véhicule, comprenant au moins une cavité délimitée par un réflecteur définissant un axe optique, ladite cavité comportant au moins une source lumineuse principale apte à éclairer une route.

La principale caractéristique d'un dispositif d'éclairage selon l'invention, est que ladite au moins une cavité contient au moins une source lumineuse secondaire permettant de réaliser au moins partiellement une signalisation du véhicule le jour. Le principe de l'invention consiste à adjoindre une source lumineuse secondaire à une source lumineuse principale dans la même cavité, de manière à ce que les deux sources coopèrent avec le même réflecteur pour assurer leur fonction. Chaque cavité possède ainsi un seul réflecteur, conformé pour assurer les fonctions d'éclairage et de signalisation. Les fonctions d'éclairage comprennent la fonction d'éclairage longue portée, encore appelée éclairage route ou feu route. Les fonctions d'éclairage comprennent également la fonction d'éclairage de croisement, encore appelée éclairage code ou feu de croisement. Il est rappelé que pour éclairer la route avec une fonction d'éclairage code, le réflecteur est conformé pour renvoyer les rayons de la source lumineuse principale en dessous d'une coupure majoritairement horizontale afin de ne pas éblouir les automobilistes qui arrivent en face. Dans le cadre d'un dispositif d'éclairage selon l'invention, il doit également être dessiné pour pouvoir réfléchir les rayons en provenance de la source lumineuse secondaire, au-dessus de ladite coupure. En effet, pour que le véhicule soit aperçu de loin, les rayons issus de la source lumineuse secondaire doivent être majoritairement dirigés vers le haut, en étant toutefois faiblement intenses pour ne pas également éblouir les autres usagers de la route. Il est à noter que les sources lumineuses principale et secondaire sont fixes, et non orientables sur commande.

De façon préférentielle, la cavité délimitée par un réflecteur et la ou les sources principales sont agencées de manière à ce que les rayons de la ou des sources principales réfléchis par la cavité forment un faisceau d'éclairage code ou de manière à ce que les rayons de la ou des sources principales réfléchis par la cavité forment un faisceau d'éclairage route. Notamment, au moins une source principale est focalisée. Le terme « focaliser » signifie être placé au niveau du foyer du réflecteur. Préférentiellement, chaque source lumineuse secondaire est défocalisée. Selon une réalisation avantageuse de l'invention, au moins une source lumineuse secondaire peut être placée à droite ou à gauche d'un plan passant par l'axe optique. Le terme « défocaliser » signifie être placé en dehors du foyer du réflecteur. Selon certaines réalisations, il est également possible d'avoir en plus au moins une source lumineuse secondaire supplémentaire défocalisée et positionnée sur l'axe optique. Selon d'autres réalisations, chaque source lumineuse secondaire est non seulement défocalisée mais également placée à droite ou à gauche d'un plan passant par l'axe optique, seules la ou les sources lumineuses principales étant sur l'axe optique.

De façon avantageuse, chaque source secondaire est agencée par rapport au réflecteur, de manière à ce que chaque source principale associée au réflecteur permet de générer un faisceau d'éclairage de la route lorsque chaque source secondaire est éteinte, chaque source secondaire associée au réflecteur assurant une fonction de signalisation du véhicule de jour, lorsque chaque source principale est éteinte.

Avantageusement, la source lumineuse principale est utilisée en combinaison avec la source lumineuse secondaire pour assurer un éclairage de signalisation du véhicule le jour. Par ce biais, la source lumineuse principale qui est initialement prévue pour éclairer la route par temps sombre afin que le conducteur puisse se repérer et rouler en toute sécurité, est également utilisée le jour pour signaler le véhicule, sans éblouir les autres usagers. De plus, puisque la source lumineuse principale participe aux deux fonctions d'éclairage et de signalisation, le véhicule va détenir au niveau de son éclairage de jour comme de nuit, une signature commune parfaitement reconnaissable, qui pourra se rattacher directement au modèle du véhicule, ou plus généralement, à sa marque. Selon une réalisation, chaque source lumineuse principale participe à l'éclairage de signalisation du véhicule au moyen d'une réduction de son intensité lumineuse. Même si la majorité des rayons réfléchis en provenance de la source lumineuse principale sont dirigés vers le sol, une faible partie de ceux-ci sont dirigés vers le haut et doivent être d'intensité modérée pour ne pas gêner les autres usagers.

Selon une réalisation, le réflecteur est un réflecteur divergent situé au-dessous de la source lumineuse principale et de la source lumineuse secondaire, la source lumineuse principale étant en arrière de la source lumineuse secondaire, le réflecteur et ces sources lumineuses étant agencées de manière à ce que les rayons lumineux émis par la source lumineuse principale et réfléchis par le réflecteur soient divergents déviés latéralement davantage que les rayons lumineux émis par la source lumineuse secondaire et réfléchis par le réflecteur. De préférence, le réflecteur est focalisé sur la source principale. Ceci est particulièrement avantageux pour obtenir un faisceau d'éclairage, en particulier un antibrouillard, pour le faisceau obtenu à partir des rayons provenant de la source principale et un faisceau de position diurne à partir des rayons provenant de la source secondaire.

Selon une réalisation, le réflecteur est un réflecteur convergent situé au-dessus de la source lumineuse principale et de la source lumineuse secondaire, la source lumineuse principale étant en avant de la source lumineuse secondaire, le réflecteur et ces sources lumineuses étant agencées de manière à ce que les rayons lumineux émis par la source lumineuse principale et réfléchis par le réflecteur soient convergents et se croisent devant le réflecteur, de manière à ce que le faisceau provenant de ces rayons soit plus large que ceux provenant de la source secondaire. De préférence, le réflecteur est focalisé sur la source principale. Ceci est particulièrement avantageux pour obtenir un faisceau d'éclairage, en particulier un antibrouillard, pour le faisceau obtenu à partir des rayons provenant de la source principale et un faisceau de position diurne à partir des rayons provenant de la source secondaire.

De façon préférentielle, chaque source lumineuse principale est constituée d'une diode électroluminescente principale.

Préférentiellement, chaque source lumineuse secondaire est constituée d'une diode électroluminescente secondaire.

Pour la suite de la description, le terme « diode » signifie « diode électroluminescente ».

De façon avantageuse, la cavité comporte une diode électroluminescente principale, ladite diode principale et chaque diode secondaire étant inscrites dans un même plan horizontal. Le terme « horizontal » doit être interprété comme si le dispositif d'éclairage selon l'invention était monté dans le véhicule.

Selon un premier mode de réalisation préféré d'un dispositif d'éclairage selon l'invention, chaque diode secondaire est placée à l'avant de la diode principale lorsque le réflecteur est positionné sous lesdites diodes. Cette configuration présente l'avantage que les diodes ne vont pas éblouir une personne se tenant debout à coté du véhicule, car les rayons lumineux incidents desdites diodes sont dirigés vers le sol. La diode principale est positionnée par rapport au réflecteur, de manière à ce que les rayons réfléchis vers l'avant du véhicule en provenance de celle-ci soient majoritairement dirigés vers le bas. En étant placées derrière la diode principale, les diodes secondaires vont émettre des rayons qui seront réfléchis vers l'avant du véhicule et majoritairement vers le haut.

Selon un deuxième mode de réalisation préféré d'un dispositif d'éclairage selon l'invention, chaque diode secondaire est placée à l'arrière de la diode principale lorsque le réflecteur est positionné au-dessus desdites diodes. Il s'agit d'une autre configuration possible constituant une alternative à celle qui est décrite ci-avant.

Avantageusement, la cavité comporte deux diodes secondaires et une diode principale, les deux diodes secondaires étant placées de chaque coté de la diode principale qui est positionnée sur l'axe optique. Cette disposition particulière des deux diodes secondaires permet d'obtenir un éclairage de signalisation au dessus de la coupure, qui est réparti de façon homogène le long d'un axe transversal du véhicule, la diode secondaire droite par rapport à la diode principale irradiant l'espace droit ou gauche situé à l'avant du véhicule selon que le réflecteur est respectivement divergent ou convergent et la diode secondaire gauche irradiant l'espace gauche ou droit situé à l'avant dudit véhicule selon que le réflecteur est respectivement divergent ou convergent.

Selon un mode de réalisation préféré d'un dispositif d'éclairage selon l'invention, les deux diodes secondaires sont placées de façon symétrique par rapport à l'axe optique dans le cas d'un réflecteur symétrique. Un réflecteur symétrique est généralement utilisé pour que la source lumineuse principale éclaire droit devant le véhicule.

Selon un autre mode de réalisation préféré d'un dispositif d'éclairage selon l'invention, les deux diodes sont décalées l'une par rapport à l'autre selon au moins une direction à choisir parmi une direction parallèle l'axe optique et une direction perpendiculaire audit axe, dans le cas d'un réflecteur dissymétrique. Un réflecteur dissymétrique est généralement utilisé pour que la source lumineuse principale éclaire de façon oblique par rapport à un axe longitudinal du véhicule. Par conséquent, afin de compenser cette dissymétrie pour obtenir un éclairage de signalisation homogène dans l'espace, et en particulier le long d'un axe transversal du véhicule, les diodes secondaires sont décalées l'une par rapport à l'autre, soit le long de l'axe optique, soit le long d'un axe perpendiculaire à cet axe, soit suivant ces deux directions.

Selon un autre mode de réalisation préféré d'un dispositif d'éclairage selon l'invention, la cavité comporte une diode principale et trois diodes secondaires, une diode secondaire étant alignée avec la diode principale le long de l'axe optique et les deux autres diodes secondaires étant positionnées de chaque coté dudit axe, les trois diodes secondaires étant défocalisées.

De façon préférentielle, chaque source lumineuse principale et chaque source lumineuse secondaire est constituée d'une source émissive, lesdites sources émissives étant regroupées dans un boitier commun pour former une diode résultante multi-sources. Habituellement, une diode électroluminescente conventionnelle comprend une source émissive enfermée dans un boitier individuel translucide. Pour cette configuration, la diode résultante peut être facilement et rapidement fabriquée, puisqu'elle est réalisée en une seule opération, contrairement à la mise en oeuvre de plusieurs diodes individuelles nécessitant la fabrication puis le montage d'une pluralité de boitiers. De plus, le positionnement puis la fixation des différentes sources émissives au sein d'une cavité s'en retrouvent simplifiées, car il n'est plus nécessaire d'agencer individuellement et de façon précise, les diodes les unes par rapport aux autres.

Préférentiellement, les sources émissives regroupées dans le boitier sont alignées le long d'un même axe.

De façon avantageuse, l'intensité lumineuse de chaque source émissive enfermée dans le boitier est pilotée de façon autonome. Autrement dit, l'intensité lumineuse de chaque source émissive présente dans le boitier commun peut se régler indépendamment de celle des autres sources émissives dudit boitier afin d'obtenir un éclairage adapté à la situation.

Avantageusement, le réflecteur de chaque cavité est divisé en secteurs paraboliques verticaux. La présence de secteurs est requise pour pouvoir diffuser la lumière en provenance de la source lumineuse principale et de la source lumineuse secondaire, de façon homogène dans un plan transversal et vertical situé à l'avant du véhicule.

L'invention a pour deuxième objet un projecteur de véhicule comprenant un dispositif d'éclairage selon l'invention.

Le dispositif d'éclairage selon l'invention présente l'avantage d'être simplifié et peu encombrant, dans la mesure où la source lumineuse principale est utilisée à la fois pour assurer une fonction d'éclairage de la route et une fonction de signalisation du véhicule par une simple réduction de son intensité lumineuse. Il a de plus l'avantage de constituer une signature spécifique du véhicule, en étant reconnaissable de jour comme de nuit et en permettant d'identifier le modèle et/ou la marque dudit véhicule. Il présente enfin l'avantage d'être peu coûteux, car il ne nécessite pas l'incorporation d'une source lumineuse secondaire importante.

On donne, ci-après, une description détaillée de plusieurs modes de réalisation préférés d'un dispositif d'éclairage selon l'invention, en se référant aux figures 1 à 13.
- Les figures 1A et 1B sont des vues schématiques d'un réflecteur symétrique d'une cavité d'un dispositif d'éclairage selon l'invention,
- La figure 2 illustre un ensemble de courbes isolux sur un écran transversal placé devant le véhicule, et obtenues à partir d'une source lumineuse principale et du réflecteur des figures 1A et 1B,
- La figure 3 illustre un ensemble de courbes isolux sur ledit écran, et obtenues à partir d'une source lumineuse principale, de deux sources lumineuses secondaires et du réflecteur des figures 1A et 1B,
- Les figures 4A et 4B sont des vues schématiques d'un réflecteur dissymétrique d'une cavité d'un dispositif d'éclairage selon l'invention,
- La figure 5 illustre un ensemble de courbes isolux sur un écran transversal placé devant le véhicule, et obtenues à partir d'une source lumineuse principale et du réflecteur des figures 4A et 4B,
- La figure 6 illustre un ensemble de courbes isolux sur ledit écran, et obtenues à partir d'une source lumineuse principale, de deux sources lumineuses secondaires et du réflecteur des figures 4A et 4B,
- La figure 7 est une superposition des courbes des figures 2 et 5,
- La figure 8 est une superposition des courbes des figures 3 et 6,
- Les figures 9A et 9B sont des vues schématiques d'un autre type de réflecteur d'une cavité d'un dispositif d'éclairage selon l'invention,
- La figure 10 illustre un ensemble de courbes isolux sur ledit écran, et obtenues à partir d'une source lumineuse principale, de deux sources lumineuses secondaires et du réflecteur des figures 9A et 9B,
- La figure 11 est une vue schématique d'une diode multi-sources émissives et d'une partie d'un réflecteur d'une cavité d'un dispositif d'éclairage selon l'invention,
- La figure 12 illustre un ensemble de courbes isolux sur un écran transversal placé devant le véhicule, et obtenues à partir des sources émissives principales de la diode de la figure 11,
- La figure 13 illustre un ensemble de courbes isolux sur un écran transversal placé devant le véhicule, et obtenues à partir des sources émissives principales et secondaires de la diode de la figure 11.

Un dispositif d'éclairage selon l'invention est généralement inséré dans un projecteur avant d'un véhicule automobile.

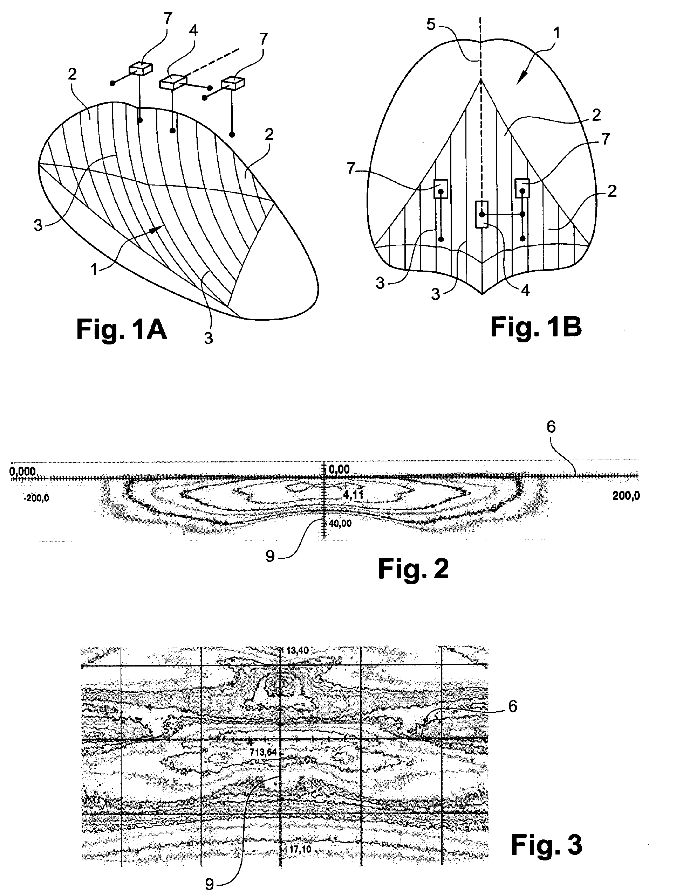

En se référant aux figures 1A et 1B, un tel dispositif d'éclairage comprend une première cavité délimitée par un premier réflecteur 1 symétrique, conformé pour assurer un faisceau d'éclairage étalé transversalement par rapport à un axe longitudinal du véhicule. Généralement, un tel réflecteur 1 possède une surface de réflexion complexe, formée par un assemblage de secteurs élémentaires 2, chacun desdits secteurs 2 se raccordant au secteur 2 immédiatement voisin le long de lignes 3 globalement verticales. Chaque secteur 2 est avantageusement généré par une génératrice horizontale d'où part un ensemble de courbes verticales vers le haut puis vers le bas. La génératrice horizontale est par exemple convexe et son profil détermine la répartition horizontale du faisceau généré par le secteur. Les génératrices des secteurs 2 sont choisies pour que les rayons issus de la source soient réfléchis par la surface en étant orienté vers le bas afin de former la coupure, par exemple la coupure du code. Les courbes verticales sont par exemple des arcs de parabole. Les foyers de chaque parabole vers le haut sont en général distincts des foyers des paraboles partant vers le bas. Une diode électroluminescente principale 4 est placée dans cette première cavité sur l'axe optique 5 du réflecteur 1, pour assurer un éclairage de la route par exemple en mode code ou en mode feu de route.

La figure 2 illustre un ensemble de courbes isolux projetées sur un écran transversal et vertical, placé à 25m devant le véhicule, et matérialisant le spectre de rayons lumineux réfléchis par le réflecteur 1 et issus de la diode principale 4.

Il est à noter que pour la suite de la description, toutes les représentations graphiques des différentes courbes isolux s'effectueront sur cet écran standardisé, placé à 25m.

En revenant à la figure 2, les rayons sont réfléchis majoritairement vers le bas sous une ligne horizontale 6, et de façon symétrique par rapport à un axe central vertical 9 coupant ladite ligne 6, et sont prévus pour éclairer la route.

En se référant aux figures 1A et 1B, cette première cavité contient également deux diodes électroluminescentes 7 secondaires, placées de par et d'autre de la diode principale 4 et de façon symétrique par rapport à l'axe optique 5 du réflecteur 1, la diode principale 4 et lesdites diodes secondaires 7 étant positionnées dans un même plan horizontal. Ces trois diodes 4,7 sont situées au dessus du réflecteur 1, les deux diodes secondaires 7 se retrouvant devant la diode principale 4, selon le sens d'émission de la lumière autour de l'axe optique 5, soit le sens vers le haut sur le dessin, afin que les rayons secondaires réfléchis par ledit réflecteur 1 et issus desdites diodes secondaires 7 soient dirigés vers le haut. En effet, ces deux diodes secondaires 7 sont beaucoup moins puissantes que la diode principale 4 et sont conçues pour assurer, au moins partiellement, une fonction de signalisation du véhicule le jour. En se référant à la figure 3, la diode principale 4 est également utilisée conjointement avec les deux diodes secondaires 7 pour participer à un éclairage de jour, permettant de signaler le véhicule aux autres usagers de la route. Dans ce cas, la puissance de fonctionnement de la diode principale 4 est fortement abaissée, afin de ne pas éblouir les autres automobilistes. Les courbes isolux placées sous la ligne horizontale 6 matérialisent les rayons réfléchis en provenance de la diode principale 4 utilisée à une puissance faible, et les courbes isolux situées au-dessus de ladite ligne horizontale 6 représentent les rayons réfléchis issus des deux diodes secondaires 7. En résumé, les courbes de la figure 3 illustrent un exemple de rayonnement de signalisation issu d'une cavité d'un dispositif d'éclairage selon l'invention, ladite cavité étant délimitée par un réflecteur 1 symétrique et logeant une diode principale 4 et deux diodes secondaires 7. Il est à noter que l'ensemble des courbes isolux de la figure 3 matérialisant un éclairage de signalisation présente une symétrie par rapport à l'axe central et vertical 9 du diagramme.

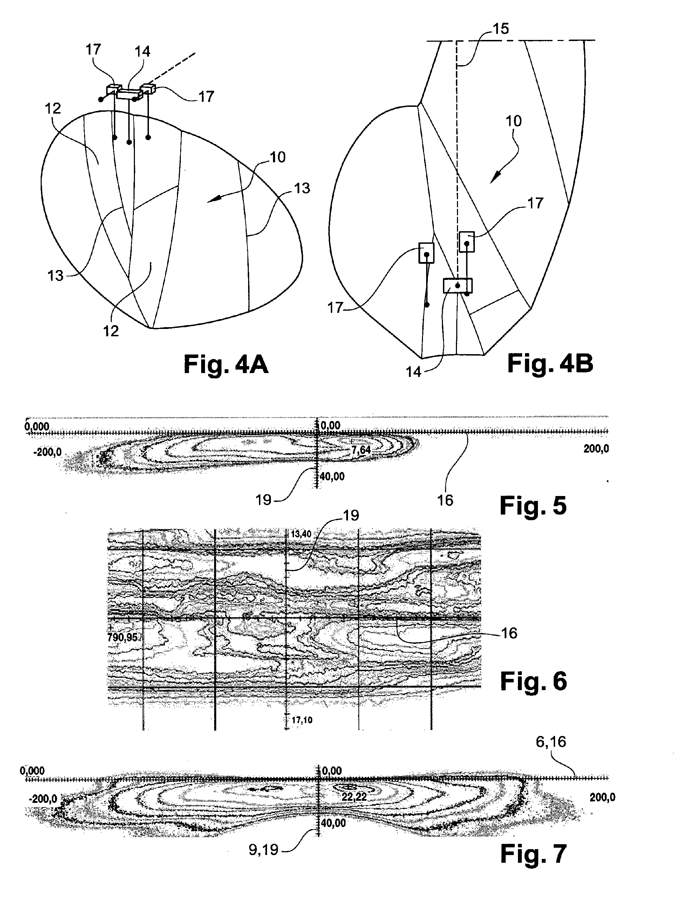

En se référant aux figures 4A et 4B, un dispositif d'éclairage selon l'invention comprend une deuxième cavité délimitée par un deuxième réflecteur 10 dissymétrique, et conformé pour assurer également un faisceau d'éclairage étalé transversalement par rapport à un axe longitudinal du véhicule. Une telle cavité peut par exemple se retrouver à une extrémité du projecteur, de manière à favoriser une zone d'éclairage décalée par rapport à l'axe central et longitudinal du véhicule. Un tel réflecteur 10 possède une surface de réflexion complexe, formée par un assemblage de secteurs élémentaires 12, chacun desdits secteurs 12 se raccordant au secteur 12 immédiatement voisin le long de lignes 13 globalement verticales. Une diode électroluminescente principale 14 est placée dans cette deuxième cavité sur l'axe optique 15 du réflecteur 10, pour assurer un éclairage de la route, par exemple en mode code ou en mode feu de route.

La figure 5 illustre un ensemble de courbes isolux projetées sur un écran transversal et vertical, placé à 25 m devant le véhicule, et matérialisant le spectre de rayons lumineux réfléchis par le réflecteur 10 et issus de la diode principale 14 dans un mode d'éclairage de la route. Les rayons sont réfléchis majoritairement vers le bas sous une ligne horizontale 16, et de façon dissymétrique par rapport à un axe central vertical 19 coupant ladite ligne 16, la majeure partie desdits rayons étant situés sur la partie gauche dudit rayon vertical 19.

En se référant aux figures 4A et 4B, cette deuxième cavité contient également deux diodes électroluminescentes 17 secondaires, placées de par et d'autre de la diode principale 14 et de façon dissymétrique par rapport à l'axe optique 15 du réflecteur 10, la diode principale 14 et lesdites diodes secondaires 17 étant positionnées dans un même plan horizontal. Ces trois diodes 14,17 sont situées au dessus du réflecteur 10, les deux diodes secondaires 17 se retrouvant devant, selon le sens d'émission de la lumière autour de l'axe optique 15, soit le sens vers le haut sur le dessin, la diode principale 14 afin que les rayons secondaires réfléchis par ledit réflecteur 10 et issus desdites diodes secondaires 17 soient dirigés vers le haut. En effet, ces deux diodes secondaires 17 sont beaucoup moins puissantes que la diode principale 4 et sont conçues pour assurer, au moins partiellement, une fonction de signalisation du véhicule le jour. Comme le montre la figure 4B, ces deux diodes secondaires 17 sont décalées l'une par rapport à l'autre, à la fois le long de l'axe optique 15 et également le long d'un axe perpendiculaire audit axe optique 15 de manière à compenser la dissymétrie du réflecteur 10. En effet, il est nécessaire que l'éclairage de signalisation produit par ces deux diodes secondaires 17 soit homogène dans l'espace, afin qu'il ne modifie pas son apparence en fonction de l'angle sous lequel il est regardé.

En se référant à la figure 6, la diode principale 14 peut également être utilisée conjointement avec les deux diodes secondaires 17 pour participer à un éclairage de jour, permettant de signaler le véhicule. Dans ce cas, la puissance de fonctionnement de la diode principale 14 est fortement abaissée, afin de ne pas éblouir les autres automobilistes. Les courbes isolux placées sous la ligne horizontale 16 matérialisent les rayons réfléchis en provenance de la diode principale 14 utilisée à une puissance faible et conservent une certaine dissymétrie par rapport à l'axe central et vertical 19 du diagramme, et les courbes isolux situées au-dessus de ladite ligne horizontale 16 représentent les rayons réfléchis issus des deux diodes secondaires 17 et demeurent symétriques par rapport audit axe vertical 19.

La figure 6 représente un ensemble de courbes isolux pour un dispositif d'éclairage selon l'invention, comprenant la première et la deuxième cavité décrites ci-avant et uniquement pour une fonction d'éclairage de la route. Pour cette configuration, seules les diodes principales 4,14 des deux cavités fonctionnent à pleine puissance. Cet ensemble de courbes résulte de la superposition des courbes de la figure 2 et de la figure 5.

La figure 7 représente un ensemble de courbes isolux pour un dispositif d'éclairage selon l'invention, comprenant la première et la deuxième cavité décrites ci-avant, et uniquement dans le cas d'une fonction de signalisation du véhicule le jour. Cet ensemble de courbes résulte de la superposition des courbes de la figure 3 et de la figure 6.

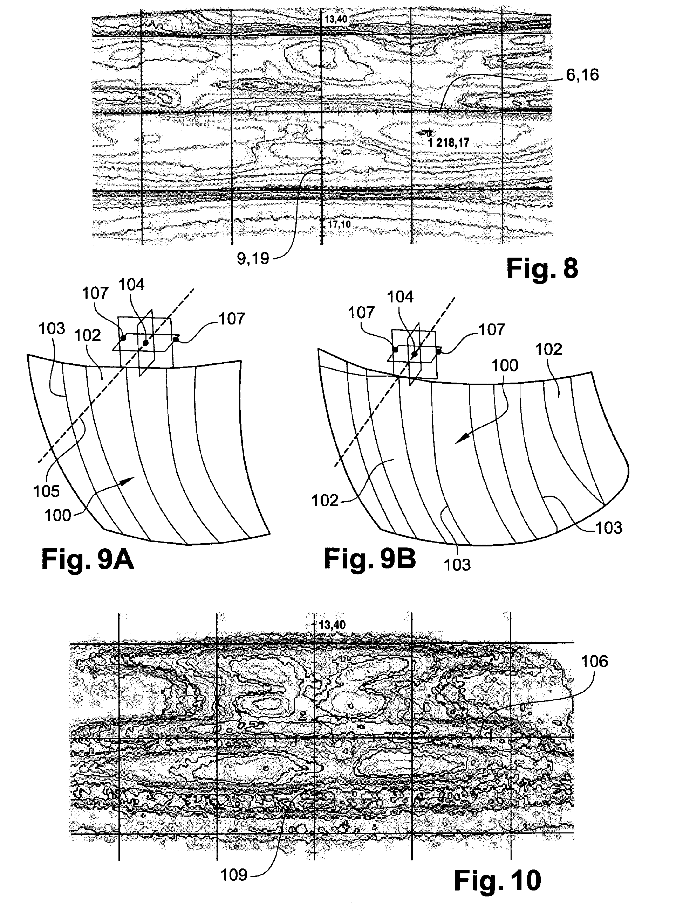

Les figures 9A et 9B illustrent un autre exemple d'une cavité d'un dispositif d'éclairage selon l'invention, et qui est délimitée par un réflecteur 100 dissymétrique, conformé pour assurer un faisceau d'éclairage à la fois étalé transversalement par rapport à un axe longitudinal du véhicule, et également concentré. Ce réflecteur 100 possède une surface de réflexion complexe, formée par un assemblage de secteurs élémentaires 102, chacun desdits secteurs 102 se raccordant au secteur 102 immédiatement voisin le long de lignes 103 globalement verticales. A l'image des deux cavités précédemment décrites, ladite cavité comprend une diode principale 104 et deux diodes 107 secondaires. La diode principale 104 peut être utilisée seule et à pleine puissance pour assurer une fonction d'éclairage de la route, ou conjointement avec les deux diodes secondaires 107 et à une puissance plus faible, pour assurer une fonction de signalisation du véhicule le jour.

La figure 10 illustre l'ensemble des courbes isolux matérialisant les rayons réfléchis issus de la diode principale 104 et des deux diodes secondaires 107 lors d'un fonctionnement de la cavité en mode signalisation du véhicule le jour. Les courbes placées au-dessus de la ligne horizontale 106 sont dues aux deux diodes secondaires 107, et les courbes placées au-dessous de ladite ligne 106 proviennent de la diode principale 104. On observe une certaine symétrie de toutes ces courbes par rapport à l'axe vertical et central 109 coupant la ligne horizontale 106.

Il est à noter que toutes les diodes précédemment évoquées sont des diodes électroluminescentes individuelles possédant chacune une source émissive et un boitier individuel translucide.

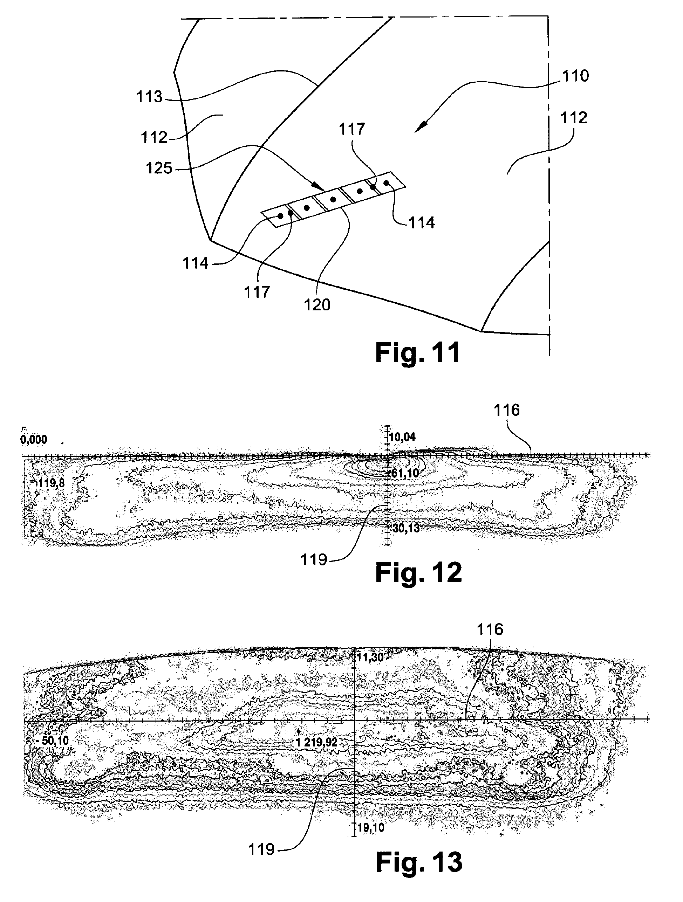

En se référant à la figure 11, un dispositif d'éclairage selon l'invention peut comprendre une cavité délimitée par un réflecteur 110 possédant une surface de réflexion complexe, formée par un assemblage de secteurs élémentaires 112 se raccordant les uns aux autres le long de lignes 113 globalement verticales, ladite cavité logeant une seule diode 115 dotée d'une multiplicité de sources émissives 114,117 logées dans un boitier commun 120. Ce boitier commun 120 est de forme parallélépipédique et est compartimenté suivant son axe longitudinal afin que chaque compartiment loge une source émissive 114,117. Par ce biais, cette diode 115 comprend cinq sources émissives principales 114 et deux sources émissives secondaires. Les cinq sources émissives principales 114 peuvent être utilisées seules et à pleine puissance pour assurer une fonction d'éclairage de la route, ou conjointement avec les deux diodes secondaires 117 et à une puissance plus faible, pour assurer une fonction de signalisation du véhicule le jour.

La figure 12 illustre un ensemble de courbes isolux projetées sur un écran transversal et vertical, placé à 25m devant le véhicule, et matérialisant le spectre de rayons lumineux réfléchis par le réflecteur 110 et issus des diodes principales 114 fonctionnant à pleine puissance pour éclairer la route. Les rayons sont réfléchis majoritairement vers le bas sous une ligne horizontale 116, et de façon dissymétrique par rapport à un axe central vertical 119 coupant ladite ligne 116.

La figure 13 illustre un réseau de courbes isolux issues de la cavité de la figure 11 et utilisée pour une fonction de signalisation du véhicule le jour. Les courbes isolux placées sous la ligne horizontale 116 matérialisent les rayons réfléchis en provenance des sources émissives principales 114 de la diode 115 et utilisées à puissance réduite, et les courbes isolux situées au-dessus de ladite ligne horizontale 116 représentent les rayons réfléchis issus des deux sources émissives secondaires 117 de ladite diode 115. De cette manière, les sources émissives principales 114 et secondaires 117 de la diode 115 participent à la signalisation lumineuse du véhicule le jour.

## Revendications

1. Dispositif d'éclairage d'un véhicule, comprenant au moins une cavité délimitée par un réflecteur (1,10,100,110) définissant un axe optique (5,15,105,115), ladite cavité comportant au moins une source lumineuse principale (4,14,104,114) apte à éclairer une route, **caractérisé en ce que** ladite au moins une cavité contient au moins une source lumineuse secondaire (7,17,107,117) permettant de réaliser au moins partiellement une signalisation du véhicule le jour.

2. Dispositif selon la revendications 1, **caractérisé en ce que** la cavité délimitée par un réflecteur (1,10,100,110) et la ou les sources principales (4,14,104,114) sont agencées de manière à ce que les rayons de la ou des sources principales réfléchis par la cavités forment un faisceau d'éclairage code ou de manière à ce que les rayons de la ou des sources principales réfléchis par la cavités forment un faisceau d'éclairage route.

3. Dispositif selon l'une quelconque des revendications 1 ou 2, **caractérisé en ce que** chaque source lumineuse secondaire (7,17,107,117) est défocalisée.

4. Dispositif selon la revendications 3, **caractérisé en ce qu'**au moins une source lumineuse secondaire est placée à droite ou à gauche d'un plan passant par l'axe optique (5,15,105,115).

5. Dispositif selon l'une quelconque des revendications 1 à 4, **caractérisé en ce que** chaque source secondaire (7,17,107,117) est agencée par rapport au réflecteur (1,10,100,110), de manière à ce que chaque source principale (4,14,104,114) associée au réflecteur (1,10,100,110) permet de générer un faisceau d'éclairage de la route lorsque chaque source secondaire (7,17,107,117) est éteinte, et **en ce que** chaque source secondaire (7,17,107,117) associée au réflecteur (1,10,100,110) assure une fonction de signalisation du véhicule de jour, lorsque chaque source principale (4,14,104,114) est éteinte.

6. Dispositif selon l'une quelconque des revendications 1 à 4, **caractérisé en ce que** la source lumineuse principale (4,14,104,114) est utilisée en combinaison avec la source lumineuse secondaire (7,17,107,117) pour assurer un éclairage de signalisation du véhicule le jour.

7. Dispositif selon la revendication 6, **caractérisé en ce que** chaque source lumineuse principale (4,14,104,114) participe à l'éclairage de signalisation du véhicule au moyen d'une réduction de son intensité lumineuse.

8. Dispositif selon l'une quelconque des revendications précédentes, **caractérisé en ce que** le réflecteur (1,10,100,110) est un réflecteur divergent situé au-dessous de la source lumineuse principale (4,14,104,114) et de la source lumineuse secondaire (7,17,107,117), la source lumineuse principale (4,14,104,114) étant en arrière de la source lumineuse secondaire (7,17,107,117), le réflecteur et ces sources lumineuses étant agencées de manière à ce que les rayons lumineux émis par la source lumineuse principale et réfléchis par le réflecteur soient divergents déviés latéralement davantage que les rayons lumineux émis par la source lumineuse secondaire et réfléchis par le réflecteur.

9. Dispositif selon l'une quelconque des revendications 1 à 7, **caractérisé en ce que** le réflecteur est un réflecteur convergent situé au-dessus de la source lumineuse principale et de la source lumineuse secondaire, la source lumineuse principale étant en avant de la source lumineuse secondaire, le réflecteur et ces sources lumineuses étant agencées de manière à ce que les rayons lumineux émis par la source lumineuse principale et réfléchis par le réflecteur soient convergents et se croisent devant le réflecteur, de manière à ce que le faisceau provenant de ces rayons soit plus large que ceux provenant de la source secondaire.

10. Dispositif selon l'une quelconque des revendications précédentes, **caractérisé en ce que** chaque source lumineuse principale est constituée d'une diode électroluminescente principale (4,14,104) et/ou chaque source lumineuse secondaire est constituée d'une diode électroluminescente secondaire (7,17,107).

11. Dispositif selon les revendications 10, **caractérisé en ce que** la la cavité comporte une diode électroluminescente principale (4,14,104), et **en ce que** ladite diode principale (4,14,104) et chaque diode secondaire (7,17,107) sont inscrites dans un même plan horizontal.

12. Dispositif selon la revendication 11, **caractérisé en ce que** chaque diode secondaire (7,17,107) est placée à l'avant de la diode principale (4,14,104) lorsque le réflecteur (1,10,100) est positionné sous lesdites diodes.

13. Dispositif selon la revendication 11, **caractérisé en ce que** chaque diode secondaire (7,17,107) est placée à l'arrière de la diode principale (4,14,104) lorsque le réflecteur (1,10,100) est positionné au-dessus desdites diodes.

14. Dispositif selon l'une quelconque des revendications 11 à 13, **caractérisé en ce que** la cavité comporte deux diodes secondaires (7,17,107) et une diode principale (4,14,104), et **en ce que** les deux diodes secondaires (7,17,107) sont placées de chaque coté de la diode principale (4,14,104) qui est positionnée sur l'axe optique (5,15,105).

15. Dispositif selon la revendication 14, **caractérisé en ce que** les deux diodes secondaires (7,107) sont placées de façon symétrique par rapport à l'axe optique (5,105) dans le cas d'un réflecteur symétrique.

16. Dispositif selon la revendication 14, **caractérisé en ce que** les deux diodes secondaires (17) sont décalées l'une par rapport à l'autre selon au moins une direction à choisir parmi une direction parallèle l'axe optique (15) et une direction perpendiculaire audit axe (15), dans le cas d'un réflecteur dissymétrique (10).

17. Dispositif selon l'une quelconque des revendications 11 à 13, **caractérisé en ce que** la cavité comporte une diode principale (4,14,104) et trois diodes secondaires (7,17,107), et **en ce qu'**une diode secondaire (7,17,107) est alignée avec la diode principale (4,14,104) le long de l'axe optique (5,15,105), les deux autres diodes secondaires (7,17,107) étant positionnées de chaque coté dudit axe (5,15,105), les trois diodes secondaires (7,17,107) étant défocalisées.

18. Projecteur de véhicule, comprenant un dispositif conforme à l'une quelconque des revendications 1 à 17.
